# EUROPÄISCHE PATENTANMELDUNG

(11) **EP 1 882 412 A1**
(43) Veröffentlichungstag der Anmeldung: **30.01.2008**
(21) Anmeldenummer: 07013550.4
(22) Anmeldetag: 11.07.2007
(51) Int. Cl.: A01K 15/02

(54) **Trainingsgerät zum Trainieren von Hunden**

(30) Priorität: 24.07.2006 DE 202006011508 U
(71) Anmelder: Krasemann, Holger, 47877 Willich (DE); Krasemann, Judith, 47877 Willich (DE)
(72) Erfinder: Krasemann, Holger, 47877 Willich (DE); Krasemann, Judith, 47877 Willich (DE)
(74) Vertreter: DR. STARK & PARTNER

(57) **Zusammenfassung**

Die Erfindung betrifft ein Trainingsgerät (1) zum Trainieren von Hunden oder ähnlichen Tieren durch Apportieren, mit einem eine Zugriffsöffnung (7) aufweisenden Stauraum (11) für Futter, wobei die Zugriffsöffnung (7) für die Schnauze des Hundes ausreichend groß dimensioniert ist und durch einen Verschluss (8) verschließbar bzw. zu öffnen ist, so dass der Hund bei geöffnetem Verschluss (8) an das Futter (12) gelangen und dieses verzehren kann. Um ein Trainingsgerät anzugeben, mit dem die Handhabung des Trainingsgeräts vereinfacht wird und auch mit wenig Kraft und Übung ein gutes Wurf- bzw. Flugverhalten erzielbar ist, soll das Trainingsgerät zur Verbesserung der Flugeigenschaften eine im Wesentliche flächige Form aufweisen.

## Beschreibung

Die Erfindung betrifft ein Trainingsgerät zum Trainieren von Hunden oder ähnlichen Tieren durch Apportieren, mit einem eine Zugriffsöffnung aufweisenden Stauraum für Futter, wobei die Zugriffsöffnung für die Schnauze des Hundes ausreichend groß dimensioniert ist und durch einen Verschluss verschließbar bzw. zu öffnen ist, so dass der Hund bei geöffnetem Verschluss an das Futter gelangen und dieses verzehren kann.

Solche Trainingsgeräte dienen zur Durchführung von dem hundespezifischen Verhalten angepassten Rollenspielen, die unter Berücksichtigung des Jagdtriebs des Hundes die Vormachtstellung des Hundebesitzers verdeutlichen. Der Hundebesitzer wirft insoweit die mit Futter gefüllte Trainingsvorrichtung weg, die der Hund anschließend apportiert. Dann wird von dem Hundebesitzer der Stauraum geöffnet, so dass der Hund an das Futter gelangt und dieses direkt aus seinem "Beuteobjekt" verzehren kann.

Aus der Praxis sind solche Trainingsgeräte bekannt, die jedoch ein längliche, rollenförmige Ausgestaltung aufweisen. Ein derartiges Trainingsgerät ist beispielsweise in der DE 199 45 719 beschrieben.

Nachteilig bei solchen Trainingsgeräten ist, dass derartige Gegenstände alleine aufgrund ihrer Form prinzipiell nicht gut zu werfen sind, insbesondere dann, wenn sie eine etwas instabile Formgebung aufweisen, weil sie beispielsweise aus einem nachgiebigen Material gefertigt sind.

Daher sind derartige Trainingsgeräte zumeinst mit einer Wurfhilfe in Form eines an einem Band angebrachten zylindrischen Knebelknopfs oder dergleichen versehen, der gut gegriffen werden kann. Das insoweit resultierende, eher einem "wegschleudern" ähnliche Wurfverhalten ist jedoch mit einem beachtlichen Kraftaufwand verbunden und erfordert für ein einigermaßen zielgenaues Werfen ausreichende Übung.

Aufgabe der Erfindung ist es, die vorgenannten Nachteile zu vermeiden und ein Trainingsgerät anzugeben, mit dem die Handhabung des Trainingsgeräts vereinfacht wird und auch mit wenig Kraft und Übung ein gutes Wurf- bzw. Flugverhalten erzielbar ist.

Diese Aufgabe wird dadurch gelöst, dass das Trainingsgerät zur Verbesserung der Flugeigenschaften eine im Wesentliche flächige Form aufweist. Hierdurch kann zum einen das Trainingsgerät ähnlich einer Wurfscheibe (Frisbee) oder einem Bumerang durch seitliches Angreifen an einer beliebigen Stelle gehalten und entsprechend geworfen werden, so dass die Handhabung deutlich vereinfacht ist.

Zum anderen resultiert durch die flächige Form auch ein verbessertes Flugverhalten, so dass eine größere Reichweite und/oder eine bessere Zielgenauigkeit aufgrund des ruhigeren Flugverlaufs resultiert.

Vorzugsweise kann die Zugriffsöffnung an der oberseitigen Oberfläche des Trainingsgeräts vorgesehen sein, so dass zum einen ein einfaches Bestücken des Stauraums mit Futter erfolgen kann und zum anderen bei geöffneter Zugriffsöffnung und auf einem Untergrund liegendem Trainingsgerät der Hund oder dergleichen leicht und einfach das Futter erreichen und verzehren kann. Der Stauraum kann dabei so bemessen sein, dass eine ausreichend große Futtermenge, insbesondere eine gesamte Mahlzeit, dort verstaubar ist.

Der Innenraum kann dabei aus hygienischen Gründen und für eine bessere Reinigung eine wasserundurchlässige Innenbeschichtung aufweisen und/oder es kann eine herausnehmbare Zusatztasche aus einem wasserundurchlässigen Material vorgesehen sein.

Erfindungsgemäß kann das Trainingsgerät zumindest eine Oberfläche aus einem textilen Material, insbesondere einem Gewebe, Geflecht, Gestrick oder aus Filz, aufweisen, insbesondere im Wesentlichen aus diesem Material gefertigt sein, und das Trainingsgerät kann zumindest ein Stabilisierungselement zur Stabilisierung der flächigen Form aufweisen, so dass zum einen eine für den Hund oder dergleichen nicht unangenehme und insbesondere nicht schädliche Oberfläche, weder hinsichtlich des Materials noch hinsichtlich der Struktur, gegeben ist und zum anderen trotz der relativen Weichheit solcher Materialien eine für den Wurfbetrieb ausreichende Stabilität des Trainingsgeräts gegeben ist.

Dabei kann wenigstens ein Stabilisierungselement länglich sowie zumindest eine gewisse Formstabilität aufweisend ausgebildet sein und in einer insbesondere außenseitig umlaufenden tunnelförmigen Führung an dem Trainingsgerät angeordnet sein, so dass das Stabilisierungselement vor einem Kontakt mit dem Hund und der Hund vor einem Kontakt mit dem Stabilisierungselement geschützt ist und durch entsprechend vorteilhafte Ausgestaltung der Platzierung oder des Verlaufs des Stabilisierungselements auch mit einem technisch einfach aufgebauten Stabilisierungselement eine gute Formstabilität des Trainingsgerätes erreicht werden kann.

Bei einem bevorzugten Ausführungsbeispiel der Erfindung kann wenigstens ein Stabilisierungselement als ein Schlauchabschnitt ausgebildet sein, so dass ein strapazierfähiges und belastbares, gleichwohl jedoch nachgiebiges Stabilisierungselement gegeben ist, so dass weder beim Zubeißen noch bei einem direkten Wurftreffer der Hund Schaden nehmen kann.

Übliche Verschlüsse für die Zugriffsöffnung sind Reißverschluss, Klettverschluss oder aber auch Knöpfe, insbesondere Druckknöpfe, jeweils in Abhängigkeit von einer eventuell geforderten Dichtigkeit des Stauraums, beispielsweise bei von Trockenfutter abweichendem Futter, das im Stauraum vorgesehen ist. In diesem Fall kann der Stauraum innenseitig feuchtigkeitsdicht beschichtet sein oder aber aus hygienischen Gründen sogar vollständig herausnehmbar ausgebildet sein.

Erfindungsgemäß kann eine Einrichtung zur Erzeugung einer mechanischen Bewegung vorgesehen sein, die einen Energiespeicher sowie einen Bewegungserzeuger und insbesondere eine Auslösevorrichtung aufweist, so dass durch eine dementsprechend erzeugte Bewegung, z. B. in Form eines Rüttelns oder Vibrierens, ein lebendiges Objekt simuliert wird und hierdurch verstärkt die Aufmerksamkeit des Hundes gewonnen wird. Die Einrichtung kann dabei aus mechanischen Komponenten, beispielsweise einem Federspeicher oder dergleichen, bestehen, es können aber auch elektrische Komponenten, wie z. B. Batterie oder Akku und Elektromotor oder dergleichen vorgesehen sein. Die Auslösevorrichtung kann beispielsweise zeitgesteuert oder fernbedienbar sein oder durch den Wurf oder den Aufprall am Boden ausgelöst werden.

Gleiches gilt auch für eine vorteilhafterweise vorgesehene Einrichtung zur Erzeugung einer Tonausgabe, die einen Energiespeicher sowie einen Tonerzeuger und insbesondere eine Auslösevorrichtung aufweist.

Auch hier kann durch eine erzeugte Tonausgabe ein lebendiges Objekt simuliert werden, so dass verstärkt die Aufmerksamkeit des Hundes gewonnen wird. Die Einrichtung kann sich dabei ebenfalls aus mechanischen Komponenten, beispielsweise einem Federspeicher und einem mechanischen Tonerzeuger, zusammensetzen, es können aber auch elektrische Komponenten, wie z. B. Batterie oder Akku mit Tongenerator oder Audio-Speicherchip und Lautsprecher oder dergleichen vorgesehen sein.

Die Auslösevorrichtung kann dabei durch den Wurf, das Auftreffen des Trainingsgeräts auf einem Untergrund oder aber das Apportieren durch den Hund aktivierbar sein, aber auch durch eine Zeitsteuerung oder eine Fernbedienung.

Bei einer bevorzugten Ausgestaltung der Erfindung kann das Trainingsgerät die Form eine rotationssymmetrische Form, insbesondere die Form einer Kreisscheibe haben und insbesondere bei mit Futter befülltem Stauraum eine auf seine Mittelebene bezogen gleichmäßige Gewichtsverteilung aufweisen, so dass das Trainingsgerät nicht nur geworfen, sondern auch Hochkant wie ein Rad über den Boden rollbar ist.

Vorteilhafterweise kann eine Einrichtung zum Ausstrahlen von Licht vorgesehen sein, die insbesondere einen Energiespeicher sowie eine Lichtquelle und insbesondere eine Auslösevorrichtung aufweist. Die Einrichtung kann beispielsweise fluoreszierend oder lumineszierend ausgebildet sein oder eine elektrische oder chemische Lichterzeugung aufweisen.

Erfindungsgemäß kann eine Einrichtung zur Abgabe von Duftstoffen vorgesehen sein, die einen Duftstoffspeicher und insbesondere eine Auslösevorrichtung für die Duftabgabe aufweist. Die Duftstoffe können dabei flüssig, als Spray oder in Festkörperform vorgesehen sein und insbesondere Pheromone aufweisen oder Blutgeruch bzw. Fleisch- oder Futtergeruch verbreiten.

Vorzugsweise kann eine Telekommunikationseinrichtung vorgesehen sein, die einen Empfänger sowie einen Tonwiedergabeeinrichtung aufweist. Dabei kann die Telekommunikationseinrichtung als bidirektionale Telekommunikationseinrichtung ausgebildet sein und einen Sender aufweisen, so dass sowohl eine Anweisung gegeben werden kann als auch die Reaktion hörbar ist.

Vorteilhafterweise kann eine Verbindungseinrichtung zur lösbaren Anbringung eines weiteren Gegenstandes, insbesondere eines weiteren Trainingsgeräts, sowie eine Einrichtung zum Lösen der Verbindung zwischen Trainingsgerät und weiterem Gegenstand vorgesehen sein, so dass insbesondere während der Flugphase ein Abtrennen des weiteren Gegenstandes möglich ist, aber auch durch den Aufprall auf dem Boden oder gesteuert, beispielsweise durch Zeitsteuerung oder Fernbedienung. Die Verbindungseinrichtung kann dabei beispielsweise magnetisch funktionieren oder durch eine mechanische Verbindung wie einen Druckknopf oder eine Klettverschluss gebildet sein.

Im Folgenden wird ein in der Zeichnung dargestelltes Ausführungsbeispiel der Erfindung erläutert. Es zeigen:
- Fig. 1: zeigt ein Aisführungsbeispiel eines erfindungsgemäßen Trainingsgeräts in perspektivischer Draufsicht, und

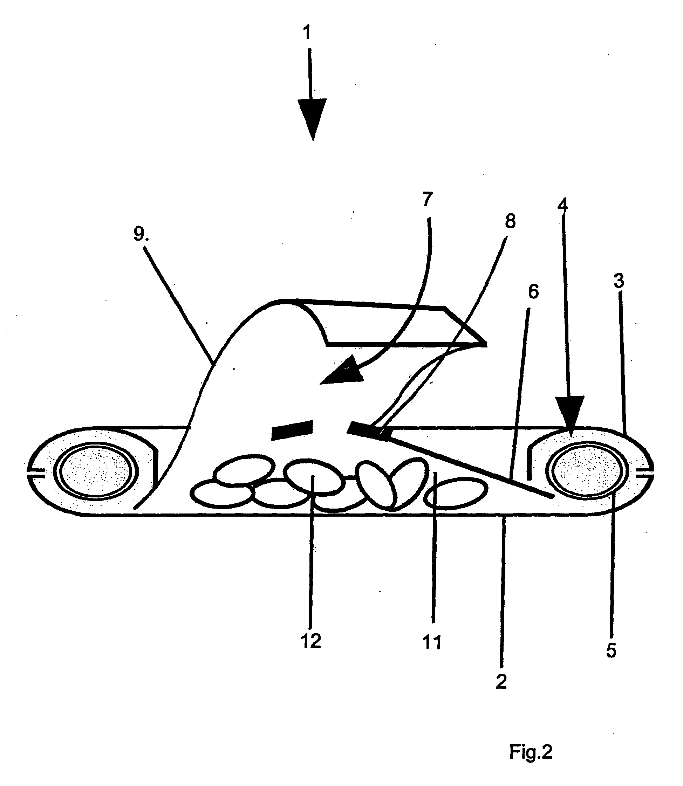

- Fig. 2: zeigt den Gegenstand nach Fig. 1 in Schnittdarstellung.

In allen Figuren werden für gleiche bzw. gleichartige Bauteile übereinstimmende Bezugszeichen verwendet.

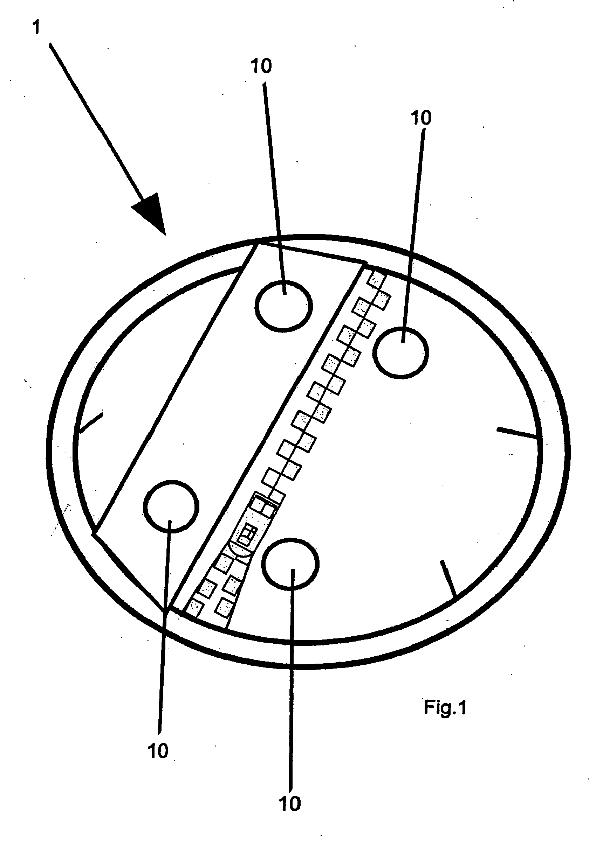

Fig. 1 zeigt ein Trainingsgerät 1. Das Trainingsgerät 1 dient dem Training von Hunden oder ähnlichen Tieren mit ausgeprägtem Jagdinstinkt, wobei das Trainingsgerät 1 von einem Benutzer geworfen und durch den Hund apportiert wird.

Das Trainingsgerät 1 weist eine im Wesentlichen flächige Form auf, die im dargestellten Ausführungsbeispiel als kreisrunde Scheibe ausgebildet ist. Das Trainingsgerät 1 besteht aus einem textilen Material und weist eine ebene Unterseite 2 auf.

Die Unterseite 2 ist seitlich mit einem oberen Ringelement 3 zu einer kreisringförmigen tunnelförmigen Führung 4 ausgebildet, in der ein als ringförmig umgebogener Schlauchabschnitt 5 ausgebildetes Stabilisierungselement vorgesehen ist. Die verschiedenen Bestandteile des Trainingsgeräts 1 können Nähte, Klebeverbindungen oder sonstige geeignete Verbindungstechniken miteinander verbunden sein.

An die tunnelförmigen Führungen 4 schließt sich wiederum die Oberseite 6 des Trainingsgeräts 1 an, die mittig mit einem Schlitz als Zugriffsöffnung 7 versehen ist. Als Verschluss 8 ist im Bereich der Zugriffsöffnung 7 ein Reißverschluss vorgesehen, so dass ein einfaches Öffnen oder Schließen der Zugriffsöffnung 7 erfolgen kann.

Um den Hund, insbesondere bei metallischen Reißverschlüssen, vor Verletzungen zu schützen, kann eine Lasche 9 vorgesehen sein, durch die der Verschluss 8 verdeckt werden kann. Diese Lasche 9 kann wiederum mit einem Klettverschluss oder dergleichen 10 in ihrer den Verschluss 8 überdeckenden Position gehalten sein.

Durch die Unterseite 2 und die Oberseite 6 wird ein Stauraum 11 zur Aufnahme von Futter 12 für den Hund geschaffen, welcher durch die als Schlitz ausgebildete Zugriffsöffnung 7 sowohl für den Benutzer bei der Befüllung als auch für den Hund bei der Futteraufnahme erreichbar ist. Die Größe der Zugriffsöffnung 7 und/oder die Größe des Stauraums 11 und insbesondere auch die Größe des gesamten Trainingsgeräts 1 kann dabei auf den Hund und seine Anatomie, d.h. beispielsweise seine Schnauzengröße und -länge, abgestimmt sein.

## Patentansprüche

1. Trainingsgerät (1) zum Trainieren von Hunden oder ähnlichen Tieren durch Apportieren, mit einem eine Zugriffsöffnung (7) aufweisenden Stauraum (11) für Futter (12), wobei die Zugriffsöffnung (7) für die Schnauze des Hundes ausreichend groß dimensioniert ist und durch einen Verschluss (8) verschließbar bzw. zu öffnen ist, so dass der Hund bei geöffnetem Verschluss (8) an das Futter (12) gelangen und dieses verzehren kann, **dadurch gekennzeichnet, dass** das Trainingsgerät (1) zur Verbesserung der Flugeigenschaften eine im Wesentliche flächige Form aufweist.

2. Trainingsgerät (1) nach dem vorhergehenden Anspruch, **dadurch gekennzeichnet, dass** die Zugriffsöffnung (7) an der oberseitigen Oberfläche des Trainingsgeräts (1) vorgesehen ist.

3. Trainingsgerät (1) nach einem der vorhergehenden Ansprüche, **dadurch gekennzeichnet, dass** das Trainingsgerät (1) zumindest eine Oberfläche aus einem textilen Material, insbesondere einem Gewebe, Geflecht, Gestrick oder aus Filz, aufweist, insbesondere im Wesentlichen aus diesem Material gefertigt ist, und dass zumindest ein Stabilisierungselement zur Stabilisierung der flächigen Form aufweist.

4. Trainingsgerät (1) nach dem vorhergehenden Anspruch, **dadurch gekennzeichnet, dass** wenigstens ein Stabilisierungselement länglich sowie zumindest eine gewisse Formstabilität aufweisend ausgebildet ist und in einer insbesondere außenseitig umlaufenden tunnelförmigen Führung (4) an dem Trainingsgerät (1) angeordnet ist.

5. Trainingsgerät (1) nach dem vorhergehenden Anspruch, **dadurch gekennzeichnet, dass** wenigstens ein Stabilisierungselement als ein Schlauchabschnitt (5) ausgebildet ist.

6. Trainingsgerät (1) nach einem der vorhergehenden Ansprüche, **dadurch gekennzeichnet, dass** eine Einrichtung zur Erzeugung einer mechanischen Bewegung vorgesehen ist, die einen Energiespeicher sowie einen Bewegungserzeuger und insbesondere eine Auslösevorrichtung aufweist.

7. Trainingsgerät (1) nach einem der vorhergehenden Ansprüche, **dadurch gekennzeichnet, dass** eine Einrichtung zur Erzeugung einer Tonausgabe vorgesehen ist, die einen Energiespeicher sowie einen Tonerzeuger und insbesondere eine Auslösevorrichtung aufweist.

8. Trainingsgerät (1) nach einem der vorhergehenden Ansprüche, **dadurch gekennzeichnet, dass** das Trainingsgerät (1) die Form eine Kreisscheibe hat und insbesondere bei mit Futter (12) befülltem Stauraum (11) eine auf seine Mittelebene bezogen gleichmäßige Gewichtsverteilung aufweist.

9. Trainingsgerät (1) nach einem der vorhergehenden Ansprüche, **dadurch gekennzeichnet, dass** eine Einrichtung zum Ausstrahlen von Licht vorgesehen ist, die insbesondere einen Energiespeicher sowie eine Lichtquelle und insbesondere eine Auslösevorrichtung aufweist.

10. Trainingsgerät (1) nach einem der vorhergehenden Ansprüche, **dadurch gekennzeichnet, dass** eine Einrichtung zur Abgabe von Duftstoffen vorgesehen ist, die einen Duftstoffspeicher und insbesondere eine Auslösevorrichtung für die Duftabgabe aufweist.

11. Trainingsgerät (1) nach einem der vorhergehenden Ansprüche, **dadurch gekennzeichnet, dass** eine Telekommunikationseinrichtung vorgesehen ist, die einen Empfänger sowie einen Tonwiedergabeeinrichtung aufweist.

12. Trainingsgerät (1) nach dem vorhergehenden Anspruch, **dadurch gekennzeichnet, dass** die Telekommunikationseinrichtung als bidirektionale Telekommunikationseinrichtung ausgebildet ist und einen Sender aufweist.

13. Trainingsgerät (1) nach einem der vorhergehenden Ansprüche, **dadurch gekennzeichnet, dass** eine Verbindungseinrichtung zur lösbaren Anbringung eines weiteren Gegenstandes, insbesondere eines weiteren Trainingsgeräts, sowie eine Einrichtung zum Lösen der Verbindung zwischen Trainingsgerät und weiterem Gegenstand vorgesehen ist.
